(19)

Europäisches Patentamt
European Patent Office
Office européen des brevets

(11) **EP 3 136 663 A1**

(12) **EUROPEAN PATENT APPLICATION**

(43) Date of publication:
**01.03.2017 Bulletin 2017/09**

(51) Int Cl.:
**H04L 12/801** (2013.01)    **H04L 12/841** (2013.01)
**H04L 12/835** (2013.01)

(21) Application number: **15290223.5**

(22) Date of filing: **26.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **Tang, Siyu**
**2018 Antwerp (BE)**
• **Lou, Zhe**
**2018 Antwerp (BE)**

(74) Representative: **Plas, Axel Ivo Michel**
**IP HILLS NV**
**Hubert Frère-Orbanlaan 329**
**9000 Gent (BE)**

(54) **NETWORK CONGESTION NOTIFICATION IN COMMUNICATION NETWORKS**

(57)    According to an embodiment a networking device is disclosed for scheduling the transmission of data flows towards client devices within a communication network. The networking device is further configured to perform the followings steps: determining whether network congestion will occur in the networking device from deadline requirements of said data flows; and determining data flows affected by this congestion; and calculating a duration of the congestion on the affected data flows; and communicating this duration to one of the client devices.

Fig. 2

EP 3 136 663 A1

## Description

### Technical Field

The present disclosure relates to the field of transportation and scheduling of data flows throughout a communication network such as for example a Local Area Network (LAN) or Wide Area Network (WAN).

A data flow carries data packets from a specific source in the communication network to a specific destination in the network for a certain application. Some applications such as streaming video applications or interactive applications are constrained by deadlines. A start deadline indicates when the first data packets in the data flow should ultimately reach the destination and an end deadline indicates when the last data packets of the data flow should ultimately reach the destination. The source networking device is also referred to as the server, server node or server device and the destination device as the client, client node or client device.

In particular, the disclosure relates to networking devices for scheduling the transportation of the data packets of different data flows. Such scheduling networking devices may for example be embodied as switches, routers, gateways, access points serving as intermediate networking nodes for data flows between a source and destination device in a communication network.

### Background

When watching online video re-buffering and freezing typically leads to frustration for the viewer. Most video freezing is caused by network congestion where new data packets comprising the following video frames cannot be downloaded before their playback times. Network congestion is typically located in the intermediate networking nodes where data packet are either dropped or buffered because the demanded data rate exceeds the available bandwidth.

Recent research has focused on mitigating network congestion by providing new video delivery methodologies that avoid re-buffering for example by quality adaptation via adaptive streaming or by quality downgrading via scalable video coding.

Another way of mitigating network congestion is provided by ECN or Explicit Congestion Notification wherein bits in the IP/TCP header of the data packets provide insights on the occurrence and degree of congestion in the communication network.

### Summary

However, despite the above solutions, re-buffering still occurs because of network congestion. One of the reasons is that the client video applications only monitor the instant throughput, i.e., they detect the network congestion at the moment it occurs. However, it has no clue about future network congestion.

Therefore, there is a need to have more information about network congestion at the end user and thus the client devices.

According to a first aspect of the invention, this need is overcome by a networking device for scheduling the transmission of data flows towards client devices within a communication network. The networking device is further configured to perform the followings steps:

- determining whether network congestion will occur in the networking device from deadline requirements of said data flows; and
- determining data flows affected by this congestion; and
- calculating a duration of the congestion on the affected data flows; and
- communicating this duration to one of the client devices.

The deadline requirements of the data flows may be known from information available in the data packets belonging to the respective data flows, for example information available in the headers of the data packets. At a certain moment in time, the networking device is thus aware of the current data flows and future data flows. As the data flows are known, the ones that will be affected by the congestion and the duration of this congestion can be derived. This duration is then communicated to an affected client, i.e., a client which receives one of the affected data flows. Communicating the duration to one of the client devices does not exclude that the duration is communicated to more than one of the client devices.

The networking devices may relate to any networking device that forwards the data flows for one or more client devices. Such networking devices may for example relate to switches, routers, gateways, access points and the like.

It is an advantage that a client device may receive information about a congestion before the congestion has actually occurred. This way, the client device may already take measure such that the congestion will not result in an abrupt degradation of the user experience, for example in a freezing of a video application. It is a further advantage that information about the duration of the congestion is provided to the client device. This way the client can assess whether it can rely on its buffered data packets or it should take other measures thereby again avoiding an abrupt change in the user experience.

The above steps may be performed when a request for this duration is received from the one client device.

In this case, the networking device only runs the algorithm according to the above steps on request thereby saving resources. This also allows providing the client device with the most up-to-date information.

Alternatively or in addition, the networking device may perform the above steps when a change in the data flows occurs.

As the change for a future congestion changes when a request for or an actual data flow appears in the networking device this allows keeping the estimates for a duration of a congestion up-to-date at all times.

According to an embodiment, the determining whether network congestion will occur further comprises:

- determining a minimum rate requirement for serving the data flows within requested deadlines for delivering the data flows; and
- comparing this minimum rate requirement with an available sending rate for the networking device.

In other words, as the networking device has information on the data flows and more particularly about the deadlines for delivering the data flows, a minimum rate requirement is calculated from this deadline information. The minimum rate is then the lowest data rate needed in order to have all data flows delivered to the respective clients within the deadlines. The requested deadlines may correspond both to start and/or end deadlines. The sending rate corresponds to the bandwidth of the networking device, i.e., the bandwidth of one of its communication interfaces for which the minimum rate is considered.

This way, a future network congestion can be predicted in an easy and straightforward manner.

Advantageously, the determining data flows then further comprises identifying data flows for which bits will be delivered after these requested deadlines. This allows identifying the data flows that will be affected by the congestion in an easy and straightforward manner.

According to an embodiment, the networking device is further configured to calculate a probability of sending the duration to the one client device. This probability then decreases with an increasing start deadline of the data flows for the client devices.

As the prediction of the congestion duration will be less accurate for data flows that start farther in the future, congestion information is communicated less often for such data flows. This probability is then used to determine whether or not the congestion information is sent to the client device.

According to a second aspect the invention relates to a system comprising a networking device according to the first aspect and a client device corresponding to one of the client devices. The client device is then further configured to perform the following steps:

- receiving the duration from the networking device;
- estimating whether a data flow buffer will be affected by the congestion based on this received duration.

According to a third aspect, the disclosure relates to method for scheduling the transmission of data flows in a networking device towards client devices within a communication network comprising the followings steps:

- determining whether network congestion will occur in said networking device from deadline requirements of said data flows; and
- determining data flows affected by said congestion; and
- calculating a duration of said congestion on affected said data flows; and
- communicating said duration to one of said client devices.

According to a fourth aspect, the disclosure relates to a computer program product comprising computer-executable instructions for performing the method according to the third aspect when the program is run on a computer.

According to a fifth aspect, the disclosure relates to a computer readable storage medium comprising the computer program product according to the fourth aspect.

According to a sixth aspect, the disclosure relates to a data processing system programmed for carrying out the method according to the third aspect.

## Brief Description of the Drawings

Fig. 1 illustrates a communication network comprising a networking device according to an embodiment of the invention;

Fig. 2 illustrates step performed by a networking device according to an embodiment of the invention; and

Fig. 3 illustrates steps performed by a networking device according to an embodiment to obtain a minimum rate requirement to fulfil all deadline requirements; and

Fig. 4 shows an illustrative example of the bandwidth requirements of seven deadline aware data flows as a function of time; and

Fig. 5 shows a pseudo code representation of an algorithm for calculating a minimum rate requirement; and

Fig. 6 shows a pseudo code representation of an algorithm for calculating a congestion duration; and

Fig. 7 shows an illustrative example of the bandwidth requirements of ten deadline aware data flows as a function of time; and

Fig. 8 shows an illustrative example of the bandwidth requirements of the ten deadline aware data flows of Fig. 7 together with the actual delivery times; and

Fig. 9 illustrates two examples of decreasing function according to an embodiment; and

Fig. 10 illustrates a SCAP request and SCAP response header according to the state of the art; and

Fig. 11 illustrates a SCAP request and SCAP response header according to the invention.

## Detailed Description of Embodiments

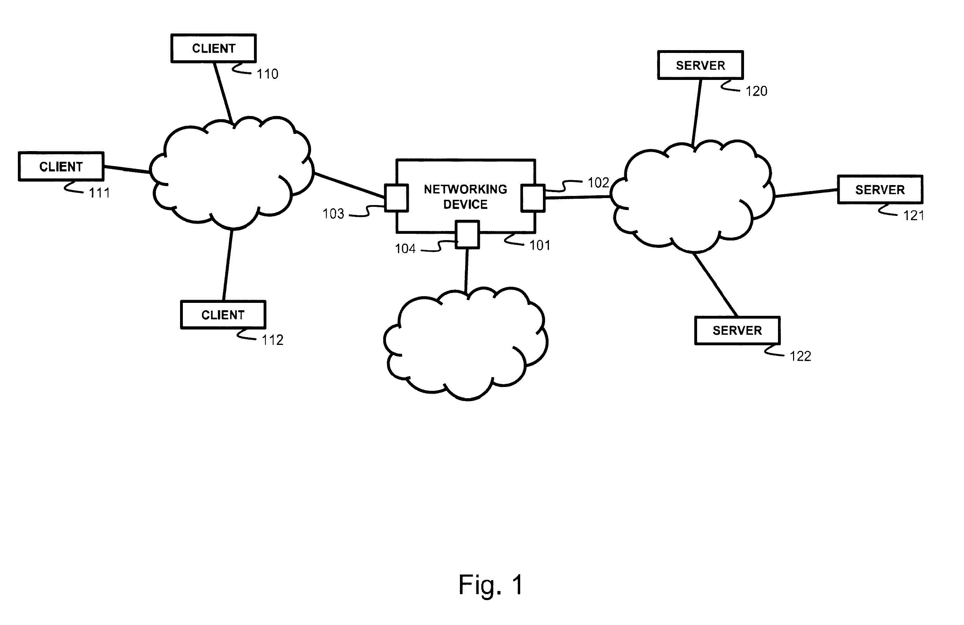

According to an embodiment, the invention relates to a networking device for the transportation and scheduling of data flows throughout a communication network such as for example a Local Area Network (LAN) or Wide Area Network (WAN). Figure 1 illustrates such a networking device 101 within communication network 100. Networking device 101 schedules the data flows from servers 120 to 122 to clients 110 to 112. To do so, networking device 101 receives data packets on one of its interfaces 102 to 104 and forwards it to the addressed client 110-112 by forwarding the packet along one of these interfaces. When more packets are to be put on a certain interface than the bandwidth of the interface provides, the packets are buffered in the networking device 101. Typically, the buffering is done by putting the packets in one of a plurality of queues that are each assigned a certain priority.

Data flows from a server 120-122 to a client 110-112 have certain deadlines within which the packets need to be delivered. When a certain data packet resides too long in a queue of a networking device such that it can no longer be delivered within the required deadline to the client, congestion occurs. The packet is then either delivered too late or even dropped by the networking device 101.

In order to anticipate network congestion, networking device 101 is configured to predict a network congestion and to calculate a duration of the congestion as congestion information. Device 101 then sends this information to one or more of the clients 110-112.

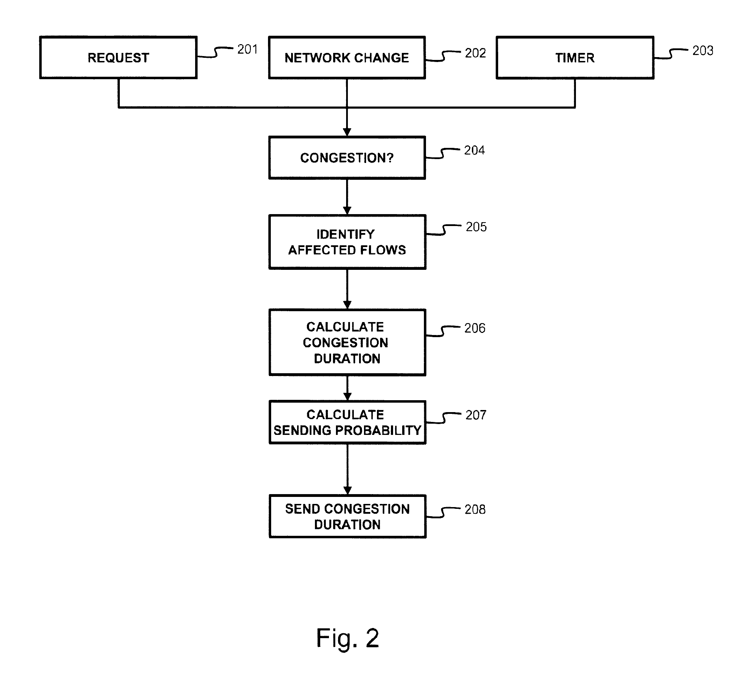

Figure 2 illustrates steps performed by networking device 101 in order to predict the congestion information according to an embodiment of the invention. The algorithm may be started by one of the events 201, 202 and/or 203. In event 201, networking device 101 receives a request from one of the clients 110-112 requesting whether one of the data flows with the respective client as destination may suffer from network congestion, i.e., whether packets of the data flows for the respective client will not arrive within the required deadlines. In event 202, the algorithm of the Figure 2 is triggered by a change in the network detected by networking device 101 causing a previous prediction to be outdated. This event may for example correspond to the arrival of a new data flow at networking device 101 or to the change in an existing data flow in networking device 101. A third event 203 is the lapse of a timer. This way the algorithm is triggered within a predetermined time interval guaranteeing that congestion information is up-to-date at all time.

After one of the events 201 to 203 has occurred, the algorithm executes step 204 and determines whether congestion will occur. According to an embodiment, networking device 101 determines this by comparing whether the minimum required data rate $R_{min}$ needed to deliver all data flows within the required deadlines does not exceed the bandwidth B of the networking device 101.

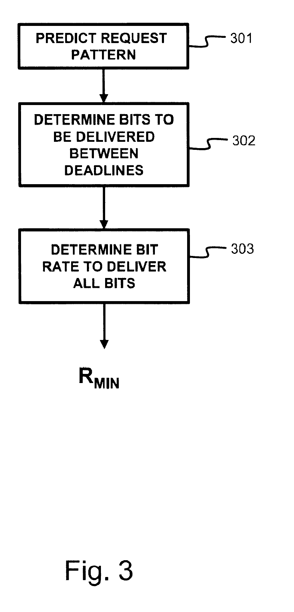

Fig. 3 illustrates further steps executed by networking device 101 in order to determine $R_{min}$ according to a further embodiment. The following symbols and definitions will be used for this:

- N(t) is defined as the number of flows with deadline requests arriving at the device 101 or predicted as the most probable sequence of requests at a certain time t.
- $\gamma_i(t)$ is the certainty of a request i at a time t where $0<\gamma i(t)\leq 1$. The higher value $\gamma_i(t)$ takes, the more certainty a request has, i.e., $\gamma_i(t)=1$ indicates that a request is known for sure. The more uncertain a request becomes, the lower the value $\gamma_i(t)$ is assigned. The latter case refers to flows that may arrive further in the future, or flows with adverse record, e.g., frequent cancellation/modification of requests of the senders who initiated the requests.
- $s_i(t)$ is the size of a flow i in bits which is either known with certainty or predicted as the most probable case at time t.
- $d_b(i;t)$ is the begin deadline of a data flow i which is either known with certainty or predicted as the most probable at time t.
- $d_e(i;t)$ is the end deadline of flow i either known with certainty or predicted as the most probable case at time t.
- $\Delta(t)$ is the deadline margin at time $t$ ($\Delta(t)\geq 0$).

Each data flow i with $1\leq i\leq N(t)$ thus has its associated size $s_i(t)$ in bits, its begin deadline $d_b(i;t)$ and its end-deadline $d_e(i;t)$. The begin deadline defines when to deliver the first bit of flow i, and the end deadline defines the time before or at which the last bit of the flow should be received by the receiver. It is assumed that the end receiver or thus the client of the data flow has a large enough play-out buffer that can store bits that are delivered before their deadline, so that delivery of bits before their actual deadline poses no problem. The device 101 maintains a deadline margin $\Delta(t)$ ($\Delta(t)\geq 0$) for deadline assurance. A flow i is required to be delivered no later than $d_e(i)-\Delta(t)$. The higher value $\Delta(t)$ takes, the more stringent the QoS requirement the system imposes. The deadline margin is a configurable parameter and may be changed over time depending on the traffic density and available network capacity.

In the first step 301 of Fig. 3 the request pattern $\gamma_i(t)$ for the data flows in the queues is predicted. In the near future the requests are known with certainty, but for the further future a prediction of the future requests needs to be made. The certainty $\gamma_i(t)$ may be calculated according to the following example. As an initial conditions, $\gamma_i = 1$, i.e., the certainty is set to 1 for all incoming requests at present or in the future. The measure of certainty is gradually adapted and improved over time by processing past user traces. This is done by computing the probability that users are going to consume the content as being requested, i.e., without request cancellation or abortion. In the simplest case, the certainty depends on how far the request starts in the future. The continuous time $u$ is split into a number of small bins with size $\Delta u$, i.e., $\Delta u = u_k - u_{k-1}$. From the past user trace, $f(u_{k-1}) = \dfrac{m_{u_{k-1}}}{n_{u_{k-1}}}$ indicates that out of the $n_{utk-1}$ requests whose begin deadline are bounded by $u_{k-1} \leq d_b(i)-t_0 < u_k$, $m_{u_{k-1}}$ requests are scheduled or watched without abortion where $t_0$ is the actual packet delivery time. Hence, upon the arrival of a new incoming request $i$, the certainty is predicted as $\gamma_i = f(d_b(i) - t_0)$ by mapping the request begin deadline to a proper bin. The prediction of the request pattern is not limited to this example. Other relevant input parameters may be taken into account such as for example the end deadline, request size or request duration. An alternative for calculating $\gamma_i$ is to consider the relationship between the number of bits that are supposed to be delivered for certain requests and the number of bits that are actually delivered, i.e., incomplete delivery due to request cancellation or abortion. Once the incoming request $i$ is processed, it is used to update $f(x)$, where the symbol x denotes different inputs that the function $f()$ may take, and, thus, to improve the accuracy of the prediction. The relative value of $d_b(i) - t_0$ is used in this example as one of the possible inputs to evaluate the certainty of the request.

Once the most probable request pattern is determined under step 301, device101 proceeds to step 302. In this step, the total number of bits that need to be delivered between the beginning or an ending of a deadline is determined. First, a sorting operation is performed to all deadlines of the N flows in the ascending order resulting in a list of timestamps $t_k$, where each $t_k$ corresponds to the beginning or ending of a deadline of a data flow. Instead of applying real-time scheduling to the data flows where the delivery starts precisely at a flow's starting deadline, flows may be scheduled and delivered upfront where possible.

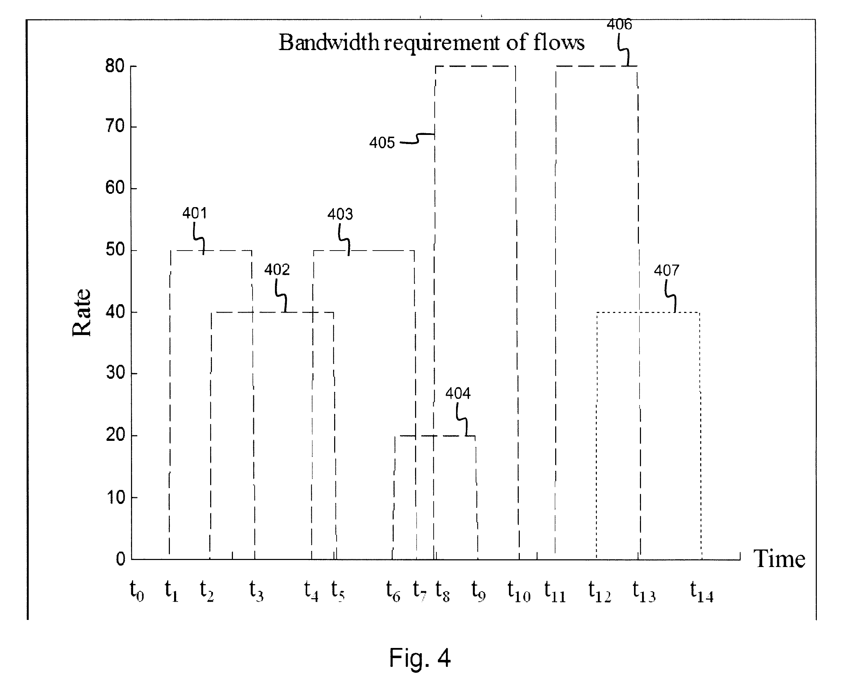

Fig. 4 provides an example of the deadline arrangement of seven data flows 401 to 407 with the deadline margin set to 0, i.e., $\Delta(t)=0$. On the Y-axis the needed data rate or request pattern of the data flows 401 to 407 is plotted as a function of time on the X-axis. The request pattern of the data flows is known with certainty, i.e., $\gamma=1$. The arrangement of deadline requests is not limited to the particular example presented in Fig. 4. It is possible that different flows may share the same start or end deadlines. In this particular case, $t_{1=}d_b(1)$, $t_{2=}d_b(2)$, $t_{3=}d_e(1)$, etc. The duration between two

discrete timestamps $t_k$ and $t_{k-1}$ is then defined as $\tau_k = t_k - t_{k-1}$ where k=1,...,2N, e.g., $\tau_1 = t_1 - t_0$, $\tau_2 = t_2 - t_1$, etc.

Then the average sending rate of flow i during interval $\tau_k$ is calculated as follows:

$$r_i(\tau_k) = \begin{cases} \dfrac{s_i}{d_e(i) - d_b(i)} & \text{if } d_b(i) < t_k \leq d_e(i) \\ 0 & \text{otherwise} \end{cases} \qquad \text{(Eq. 1)}$$

where the contribution of the physical propagation delay is neglected from the calculation. From the average sending rate, the total number of bits of all N data flows to be delivered during interval $\tau_k$ is obtained by the following equation:

$$C_{tot}(\tau_k) = \sum_{i=1}^{N} r_i(\tau_k) \cdot \gamma_i \cdot \tau_k \qquad \text{(Eq. 2)}$$

where the certainty $\gamma_i$ determines the amount of bits to be delivered during interval $\tau_k$. The less probable a request is, the less bit-rate shall be allocated to that request. For flows that are known for sure, i.e., where $\gamma_i = 1$.

Then device 101 proceeds to step 303 of Fig. 3 where the minimum rate requirement $R_{min}$ is calculated by a minimum bandwidth allocation algorithm that updates the $R_{min}$ iteratively over the 2N timestamps that were obtained in step 301, assuming $\gamma_i = 1$ for all flows.

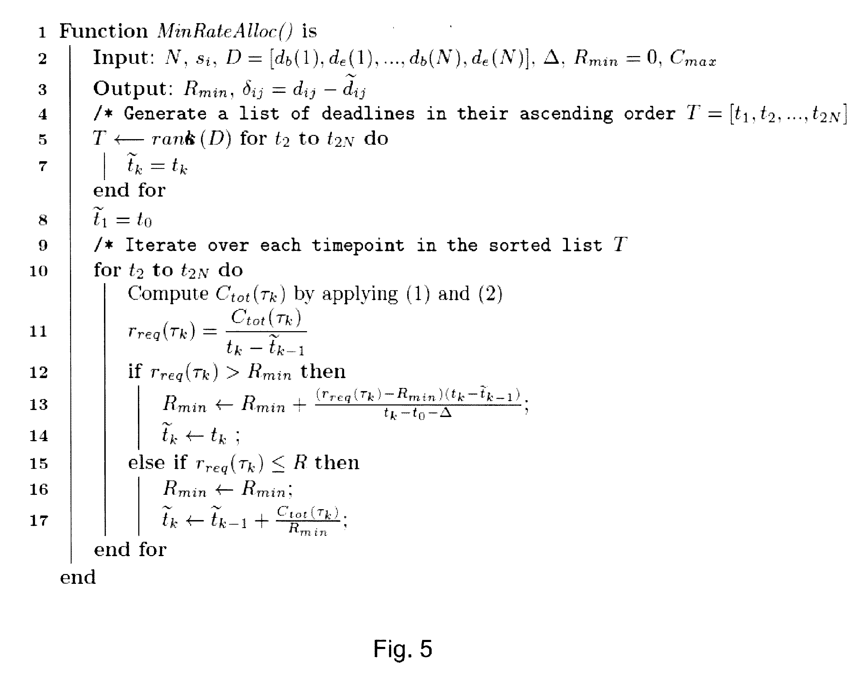

A pseudo code representation of this algorithm is shown in Fig. 5 with line number references used below shown at the left side of Fig. 5. The symbol ~ is used to indicate a value that is updated at each iterative step. By default, $\tilde{t}_k = t_k$ as an initialization step for each timestamp, with the exception for $\tilde{t}_1 = t_0$ on line 8 because the actual delivery time for the N flows starts one to.

The minimum bandwidth calculation algorithm then performs the following operations:

- The iteration is initiated as from $t_2$ (line 10).
- For each $t_k$, the scheduler calculates the requested sending rate $r_{req}(\tau_k)$, where $t_k - \tilde{t}_{k-1}$ is the actual delivery time for the $C_{tot}(\tau_k)$ bits based on the bandwidth issued in previous iterations (line 11).
- If $r_{req}(\tau_k)$ is larger than the previously allocated rate, $R_{min}$ is increased (line 13) and the actual delivery time at timestamp $t_k$ remains unchanged (line 14).
- If $r_{req}(\tau_k)$ is smaller than the previously allocated rate, $R_{min}$ remains unaltered (line 16), while the actual delivery time at timestamp $t_k$ is reduced (line 17);

If the deadline margin is $\Delta(t)=0$, then, at the end of the algorithm, there will be one data flow that will be delivered precisely at its deadline if the deadline aware traffic is constrained to $R_{min}$. The remaining data flows will then be delivered ahead of their deadlines. In case of a more stringent deadline margin $\Delta > 0$, all data flows will be delivered ahead of their deadlines if the deadline aware data flows is allocated the calculated bandwidth $R_{min}$.

In order to detect whether congestion will occur, the required data rate $R_{min}$ is then compared with the available bandwidth B. This bandwidth may be the bandwidth of the interface over which the data flows are forwarded or may be the bandwidth that is assigned to the data flows, for example the bandwidth assigned to the queues comprising the data flows.

In the next step 205 of the algorithm as illustrated in Fig. 2, the affected flows are determined, i.e., the data flows and thus the clients for which data packets will be dropped are identified. This will depend on how the dropping of packets is performed. In a first way, the packets may be dropped randomly over the data flows thereby affecting all data flows. In a second way, the data flows may be prioritized wherein certain data flows have priority over other data flows. Packet of low priority data flows are then dropped first while high priority data flows remain unaffected by the network congestion. In any case, the clients that will be affected by the congestion are identified upon performing the packet drops by keeping track on which data flows the packet drops are performed and identifying the corresponding client.

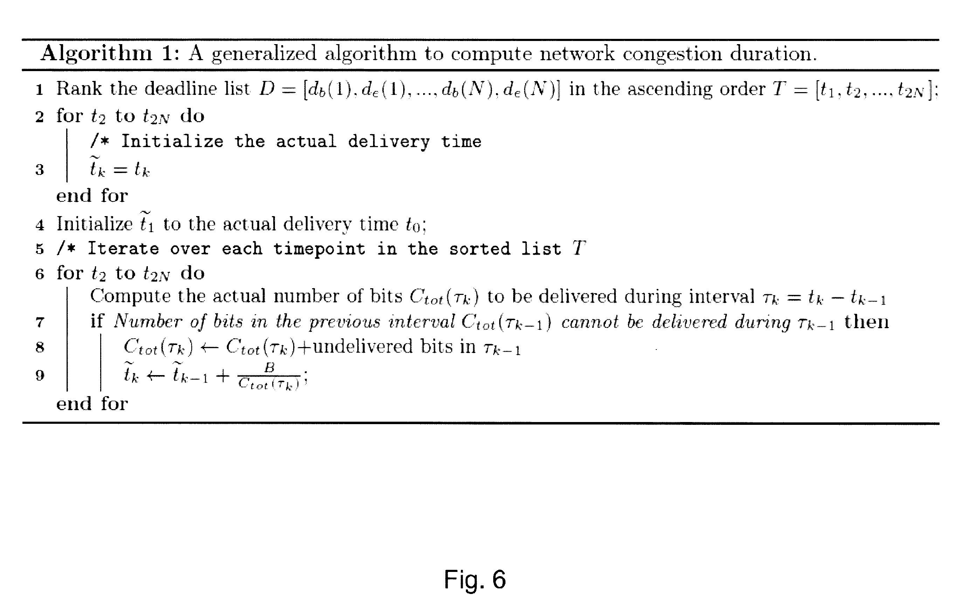

Then, as illustrated in Fig. 2, the algorithm proceeds to step 206 where the congestion duration is estimated. According to a further embodiment this may be performed by an algorithm of which a pseudo-code representation is shown in Fig. 6. With this algorithm, the actual delivery time of the begin and end deadlines in each data flow can be determined. With linear extrapolation, the actual delivery time for each bit in all of the data flows may then also be derived. Therefore, congestion information may be derived as the beginning and ending time of the congestion for a certain data flow and thus for a certain client. Alternatively, the prediction may be performed on a finer time scale, i.e., by identifying the congestion beginning and ending time on a bit-level.

The application of the algorithm as represented in Fig. 6 is further illustrated by an example as shown in Fig.

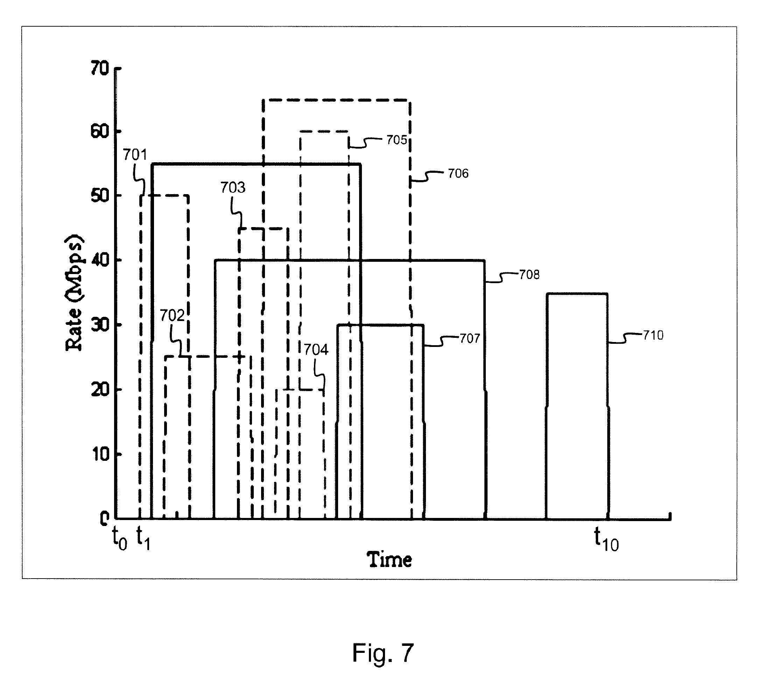

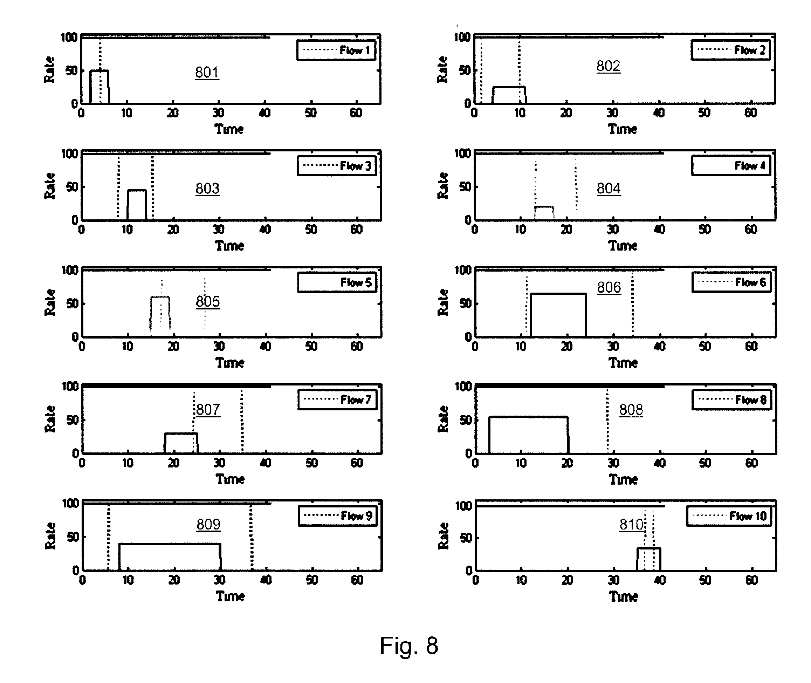

7 and Fig. 8. Suppose that 10 data flows 701 to 710 request arrive in the system at time to, as illustrated in Fig. 7. The requests are known with certainty ($\gamma_i$=1) and all flows have the same priority. The deadline margin is defined as $\Delta$=0, indicating that a bit should be delivered before or precisely at its deadline. Otherwise, deadline violation will be detected. To deliver the 10 data flows within their deadline requirements, a minimum bit-rate $R_{min}$ of 143.5Mbps needs to be guaranteed. The available bandwidth B granted for the data flows is 100Mbps, leading to the occurrence of network congestion. In Fig. 8, for each of these ten data flows 801 to 810, both the requested rate and actual rate is plotted against time in respectively dotted and solid lines. As to actual flows all arrive after the requested rates, all 10 data flows suffer from network congestion, i.e., the begin and/or end deadline cannot be met. Therefore, network congestion starts at time $t_1$ and is alleviated at time $t_{10}$ after data flow 810 is served. The congestion duration is then established as time to and time $t_{10}$.

The algorithm then proceeds to the optional step 207 as illustrated in Fig. 2 where a probability to send the predicted congestion duration for a client's data flow is calculated. It is likely that the present network situation, i.e., number of requests, size of requests, and available bandwidth, is known with certainty. The congestion information for a future request however, e.g., a request whose begin deadline is scheduled 2 hours later, is subject to higher uncertainty due to the varying network condition, i.e., by arrival of new flows, departure of existing flows, changing network bandwidth or even the likelihood that the request stays in the system. Hence, the congestion information may be send to the client with a probability, e.g., $p_i \propto f(d_b(i))$, where $f(.)$ is a decreasing function with respect to the begin deadline of a flow or with respect to the loyalty of a flow in the system, or with some other relevant parameters. This allows letting near-future flows to react timely to network congestion while not causing unnecessary reaction for far-future flows as the network situation may change before their delivery deadlines are violated.

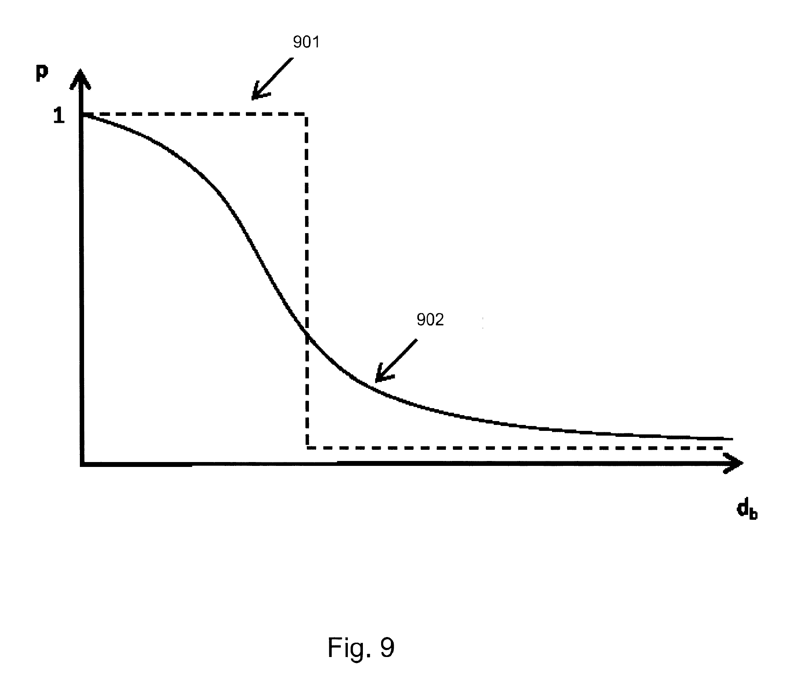

Fig. 9 illustrates two examples 901 and 902 of such decreasing functions $f(.)$ that may be used to evaluate the congestion certainty of a flow. In these two examples, the further a request is reserved for the future, the smaller the likelihood that the congestion notification will be accurate in the future. The probability to forward the congestion information to the end-user, e.g., last flow in Fig. 1, is therefore smaller compared to the near future flows.

The algorithm then proceeds to step 208 of Fig. 2 wherein the predicted congestion duration is sent to the respective client 110-112. When a probability for sending the information was determined in step 207, the congestion information is sent according to the obtained probability. For example, when the obtained probability is 0.8, the congestion information will be sent to the client 8 out of ten times.

The congestion information may be send to the client by a separate control message apart from the data flow.

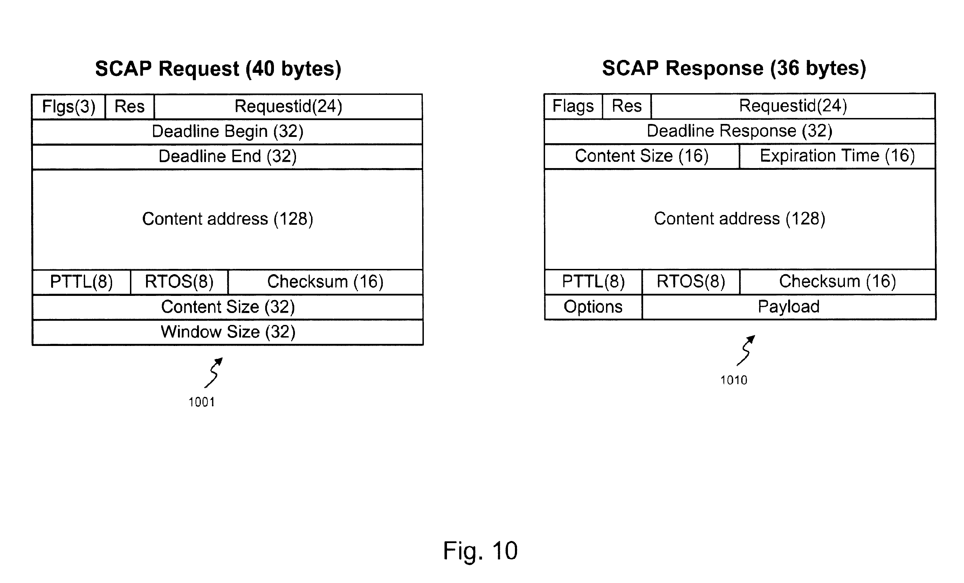

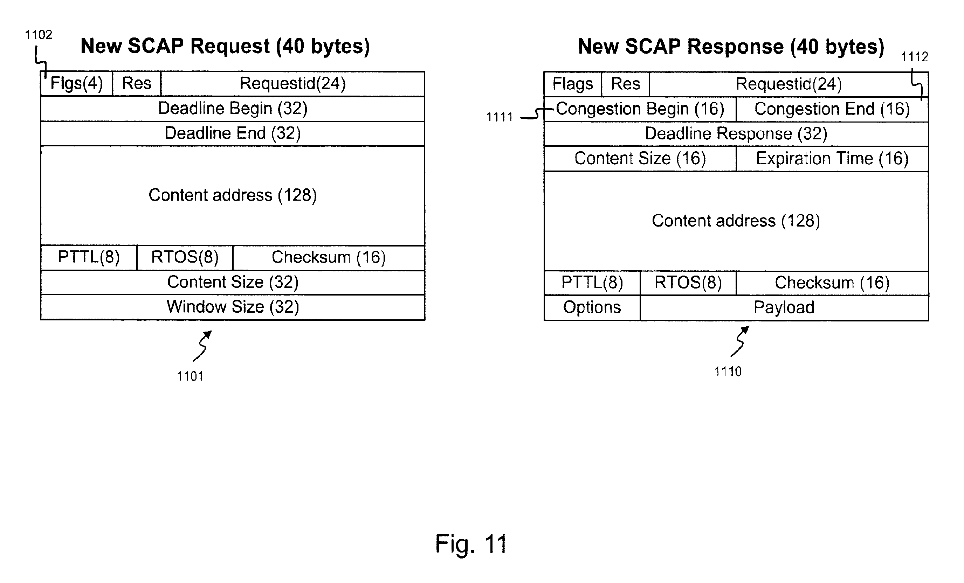

In an alternative embodiment, a new field is defined in the protocol header of the data packets of the data flow and the congestion information is provided therein. Fig. 10 and Fig. 11 illustrate this for the case where the SCAP protocol is used as transport protocol. Fig. 10 illustrates the fields in the SCAP header as known in the art according to the SCAP protocol. Header 1001 illustrates the SCAP Request header and header 1010 illustrates the SCAP response. Fig. 11 illustrates the newly defined SCAP headers 1101 and 1110 according to an embodiment of the invention. The SCAP request header 1101 is thereby updated with one more flag 1102 comparing to the old SCAP header 1001. This one-bit flag indicates whether a client 110-112 is going to request congestion information, e.g. "1" means yes and "0" means no. A client can then specify this flag in step 201 of the algorithm according to Fig. 2 in order to request congestion duration information from networking device 101. In the new SCAP Response header 1110, there are 2 extra fields 1111 and 1112 being the "congestion begin" field and the "congestion end" field. These fields are filled in by the networking device 101 in step 208 of the algorithm according to Fig. 2 in order to provide the client the start time and duration in seconds of the near future network congestion.

According to an embodiment, a client 110-112 may use the congestion duration according to the following steps.

Step 1: Request network congestion information if necessary.

A client may choose to request the explicit network congestion information from networking device 101 if needed. Such an operation may for example be performed by setting the dedicated single bit field 1102 in the SCAP request header to "1". A client device may initiate such congestion information requests when an experience of the user related to the received data flow is near a worst-case condition, e.g., when video content in a data flow is viewed at the lowest quality level or bit-rate or when the client detects constant buffer draining. A client may also use such request in order to determine the video quality level to be requested to a server in a next round.

Step 2: Process received network congestion information.

Due to network dynamicity, i.e., arrival of new flows and departure of existing flows, the congestion condition may vary over time. The client may therefore process the received and possibly varying congestion information, and update the stored congestion information accordingly. It may for example keep an exponential moving average of the congestion duration.

Step 3: Display (updated) network information in the video player

The received congestion information provides insights on the duration of current network congestion. While a packet drop issued in the network reveals the degree of congestion. Combining these two parameters, the client may then estimate whether current network conditions will cause a buffer underflow and when the playback buffer will be properly filled again. In case of transient network congestion, e.g., a congestion lasting no more than a few millisecond, or of a small amount of packet drops, the video playback buffer might not be affected. The network congestion information will then not be displayed to the user of the video player. Once rebuffering or playback freezing occurs or is going to happen in the near future, an extra message (apart from the buffering symbol) may then be displayed. For example one of the following messages may be displayed:

- "Your viewing will be disturbed in x seconds/minutes due to degrading networking condition" or
- "Network conditions will improve in y seconds/minutes, you will be able to resume viewing then".

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A networking device (101) for scheduling the transmission of data flows (701-710) towards client devices (110-112) within a communication network; said networking device being configured to perform the followings steps:

   - determining (201) whether network congestion will occur in said networking device from deadline requirements of said data flows; and
   - determining (205) data flows affected by said congestion; and
   - calculating (206) a duration of said congestion on affected said data flows; and
   - communicating (208) said duration to one of said client devices.

2. A networking device according to claim 1 configured to perform said steps when a request (201) for said duration is received from said one client device.

3. A networking device according to claim 1 configured to perform said steps when a change (202) in said data flows occurs.

4. A networking device according to claim 1 wherein said determining whether network congestion will occur further comprises:

   - determining (301-303) a minimum rate requirement for serving said data flows within requested deadlines for delivering said data flows; and
   - comparing said minimum rate requirement with an available sending rate for said networking device.

5. A networking device according to claim 4 wherein said determining data flows further comprises identifying data flows for which bits will be delivered after said requested deadlines.

6. A networking device according to claim 1 wherein said networking device is further configured to calculate (207) a probability of communicating said duration to said one client device; wherein said probability decreases with an increasing start deadline a data flows for said one client devices.

7. System comprising a networking device (101) according to claim 1 and a client device (110-112) corresponding to said one of said client devices; wherein said client device is further configured to perform the following steps:

   - receiving said duration from said networking device;
   - estimating whether a data flow buffer will be affected by said congestion based on said duration.

8. A method for scheduling the transmission of data flows (701-710) in a networking device (101) towards client devices (110-112) within a communication network comprising the followings steps:

   - determining (201) whether network congestion will occur in said networking device from deadline requirements of said data flows; and
   - determining (205) data flows affected by said congestion; and
   - calculating (206) a duration of said congestion on affected said data flows; and
   - communicating (208) said duration to one of said client devices.

9. A computer program product comprising computer-executable instructions for performing the method according to claim 8 when the program is run on a computer.

10. A computer readable storage medium comprising the computer program product according to claim 10.

11. A data processing system programmed for carrying out the method according to claim 8.

Fig. 1

Fig. 2

```
┌─────────────────────┐
│  PREDICT REQUEST    │ ⌐ 301
│     PATTERN         │
└─────────────────────┘
           │
           ▼
┌─────────────────────┐
│  DETERMINE BITS TO  │
│    BE DELIVERED     │ ⌐ 302
│     BETWEEN         │
│    DEADLINES        │
└─────────────────────┘
           │
           ▼
┌─────────────────────┐
│   DETERMINE BIT     │ ⌐ 303
│  RATE TO DELIVER    │
│     ALL BITS        │
└─────────────────────┘
           │
           ▼
```

$$R_{MIN}$$

Fig. 3

Fig. 4

```
Function MinRateAlloc() is
    Input: $N$, $s_i$, $D = [d_b(1), d_e(1), ..., d_b(N), d_e(N)]$, $\Delta$, $R_{min} = 0$, $C_{max}$
    Output: $R_{min}$, $\delta_{ij} = d_{ij} - \tilde{d}_{ij}$
    /* Generate a list of deadlines in their ascending order $T = [t_1, t_2, ..., t_{2N}]$
    $T \longleftarrow rank(D)$ for $t_2$ to $t_{2N}$ do
        $\tilde{t}_k = t_k$
    end for
    $\tilde{t}_1 = t_0$
    /* Iterate over each timepoint in the sorted list $T$
    for $t_2$ to $t_{2N}$ do
        Compute $C_{tot}(\tau_k)$ by applying (1) and (2)
        $r_{req}(\tau_k) = \dfrac{C_{tot}(\tau_k)}{t_k - \tilde{t}_{k-1}}$
        if $r_{req}(\tau_k) > R_{min}$ then
            $R_{min} \leftarrow R_{min} + \dfrac{(r_{req}(\tau_k) - R_{min})(t_k - \tilde{t}_{k-1})}{t_k - t_0 - \Delta}$;
            $\tilde{t}_k \leftarrow t_k$ ;
        else if $r_{req}(\tau_k) \leq R$ then
            $R_{min} \leftarrow R_{min}$;
            $\tilde{t}_k \leftarrow \tilde{t}_{k-1} + \dfrac{C_{tot}(\tau_k)}{R_{min}}$;
    end for
end
```

<div style="text-align:center">Fig. 5</div>

**Algorithm 1:** A generalized algorithm to compute network congestion duration.

Rank the deadline list $D = [d_b(1), d_e(1), ..., d_b(N), d_e(N)]$ in the ascending order $T = [t_1, t_2, ..., t_{2N}]$;

for $t_2$ to $t_{2N}$ do
    /* Initialize the actual delivery time
    $\tilde{t}_k = t_k$
end for

Initialize $\tilde{t}_1$ to the actual delivery time $t_0$;

/* Iterate over each timepoint in the sorted list $T$

for $t_2$ to $t_{2N}$ do
    Compute the actual number of bits $C_{tot}(\tau_k)$ to be delivered during interval $\tau_k = t_k - t_{k-1}$
    if *Number of bits in the previous interval* $C_{tot}(\tau_{k-1})$ *cannot be delivered during* $\tau_{k-1}$ then
        $C_{tot}(\tau_k) \leftarrow C_{tot}(\tau_k) +$ undelivered bits in $\tau_{k-1}$
        $\tilde{t}_k \leftarrow \tilde{t}_{k-1} + \frac{B}{C_{tot}(\tau_k)}$;
end for

Fig. 6

Fig. 7

Fig. 8

Fig. 9

## SCAP Request (40 bytes)

| Flgs(3) | Res | Requestid(24) |
|---|---|---|
| Deadline Begin (32) | | |
| Deadline End (32) | | |
| Content address (128) | | |
| PTTL(8) | RTOS(8) | Checksum (16) |
| Content Size (32) | | |
| Window Size (32) | | |

1001

## SCAP Response (36 bytes)

| Flags | Res | Requestid(24) | |
|---|---|---|---|
| Deadline Response (32) | | | |
| Content Size (16) | | Expiration Time (16) | |
| Content address (128) | | | |
| PTTL(8) | RTOS(8) | Checksum (16) | |
| Options | Payload | | |

1010

EP 3 136 663 A1

Fig. 10

EP 3 136 663 A1

1102

**New SCAP Request (40 bytes)**

| Flgs(4) | Res | Requestid(24) |
|---|---|---|
| Deadline Begin (32) | | |
| Deadline End (32) | | |
| Content address (128) | | |
| PTTL(8) | RTOS(8) | Checksum (16) |
| Content Size (32) | | |
| Window Size (32) | | |

1101

**New SCAP Response (40 bytes)** 1112

| Flags | Res | Requestid(24) |
|---|---|---|
| Congestion Begin (16) | | Congestion End (16) |
| Deadline Response (32) | | |
| Content Size (16) | | Expiration Time (16) |
| Content address (128) | | |
| PTTL(8) | RTOS(8) | Checksum (16) |
| Options | | Payload |

1111

1110

Fig. 11

Europäisches
Patentamt

European
Patent Office

Office européen
des brevets

## EUROPEAN SEARCH REPORT

Application Number

EP 15 29 0223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 717 693 A (CHINA ACADEMY OF TELECOMM TECH) 17 June 2015 (2015-06-17) * abstract * * paragraphs [0001] - [0002] * * paragraph [0024] * * paragraph [0057] * * paragraphs [0127] - [0139] * * claims 1-4, 21 * * figures 1-2 * | 1-11 | INV. H04L12/801 H04L12/841 H04L12/835 |
| A | US 2006/143678 A1 (CHOU PHILIP A [US] ET AL) 29 June 2006 (2006-06-29) * abstract * * paragraph [0001] - paragraph [0032] * * paragraph [0059] * * paragraph [0067] - paragraph [0074] * * paragraph [0090] - paragraph [0093] * * claims 1, 42 * * figures 5-8 * | 1-11 | |
| A | US 2013/290492 A1 (ELARABAWY AHMED [US] ET AL) 31 October 2013 (2013-10-31) * abstract * * paragraph [0002] - paragraph [0006] * * paragraph [0029] * * paragraph [0049] - paragraph [0056] * * paragraph [0079] - paragraph [0101] * * paragraph [0111] * * paragraph [0120] - paragraph [0121] * * paragraph [0128] - paragraph [0133] * | 1-11 | TECHNICAL FIELDS SEARCHED (IPC) H04L |
| A | EP 1 304 839 A2 (NEC CORP [JP]) 23 April 2003 (2003-04-23) * abstract * * paragraph [0001] - paragraph [0078] * * claims 1, 18 * * figures 3, 8-9 * | 1-11 | |

The present search report has been drawn up for all claims

| Place of search | Date of completion of the search | Examiner |
|---|---|---|
| Munich | 3 December 2015 | Schrembs, Gerd |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 3 136 663 A1

## ANNEX TO THE EUROPEAN SEARCH REPORT
## ON EUROPEAN PATENT APPLICATION NO.

EP 15 29 0223

03-12-2015

| Patent document cited in search report | | Publication date | Patent family member(s) | | Publication date |
|---|---|---|---|---|---|
| CN 104717693 | A | 17-06-2015 | NONE | | |
| US 2006143678 | A1 | 29-06-2006 | NONE | | |
| US 2013290492 | A1 | 31-10-2013 | NONE | | |
| EP 1304839 | A2 | 23-04-2003 | EP | 1304839 A2 | 23-04-2003 |
| | | | JP | 4041944 B2 | 06-02-2008 |
| | | | JP | 2003124954 A | 25-04-2003 |
| | | | US | 2003076781 A1 | 24-04-2003 |